# EUROPÄISCHE PATENTSCHRIFT

(11) **EP 2 566 749 B1**
(45) Veröffentlichungstag und Bekanntmachung des Hinweises auf die Patenterteilung: **21.04.2021**
(21) Anmeldenummer: 11718002.6
(22) Anmeldetag: 27.04.2011
(51) Int. Cl.: B62M 6/50, B62M 6/45, B62M 23/02

(54) **GETRIEBE FÜR ELEKTROFAHRRÄDER ZUR ERFASSUNG EINES DREHMOMENTS UND ZUGEHÖRIGES VERFAHREN FÜR ELEKTROFAHRRÄDER ZUR ERFASSUNG EINES DREHMOMENTS**
TRANSMISSION FOR ELECTRICAL BICYCLES FOR DETECTING A TORQUE AND RELATED METHOD FOR ELECTRICAL BICYCLES FOR DETECTING A TORQUE
TRANSMISSION POUR MOTOCYCLETTES ÉLECTRIQUES, POUR LA DÉTECTION D'UN COUPLE, ET PROCÉDÉ CORRESPONDANT POUR MOTOCYCLETTES ÉLECTRIQUES POUR LA DÉTECTION D'UN COUPLE

(30) Priorität: 06.05.2010 DE 102010028643
(43) Veröffentlichungstag der Anmeldung: 13.03.2013
(73) Patentinhaber: Robert Bosch GmbH, 70442 Stuttgart (DE)
(72) Erfinder: AYDOGAN, Serdar, 70186 Stuttgart (DE); ZLINDRA, Martin, 71106 Magstadt (DE); BRAUN, Sigmund, 72127 Kusterdingen (DE)
(86) Internationale Anmeldenummer: PCT/EP2011/056661
(87) Internationale Veröffentlichungsnummer: WO 2011/138202

(56) Entgegenhaltungen:
- JP-A- S5 737 230
- JP-A- 55 063 730
- JP-A- 2000 079 895
- JP-A- 2002 331 985
- JP-A- 2008 189 136
- US-A1- 2002 166 708
- US-B1- 6 672 418

## Beschreibung

### Stand der Technik

Auf dem Gebiet der Erfindung, d.h. insbesondere das Gebiet der Elektrofahrräder und der zugehörigen Pedalkraftsensoren sind Mechanismen zur Drehmomenterfassung bekannt, um anhand des Drehmoments, mit der die Tretkurbel betätigt wird, auf die Fahrerleistung zu schließen. Die Fahrerleistung bzw. eine damit vergleichbare Größe wird als Eingangsgröße bei der Regelung eines Elektrozusatzantriebs von Elektrofahrrädern verwendet. Die verwendeten Sensoren sind unmittelbar an exponierten Orten vorgesehen und an Elementen befestigt, über die das gesamte Drehmoment übertragen wird. Dadurch sind sie besonders fehleranfällig.

Neben Lösungen, bei denen eine Kraft unmittelbar durch Erfassung an der Kurbelwelle ermittelt wird oder durch Kraftsensoren erfasst wird, die an den Pedalen angeordnet sind, bestehen Ansätze, wie sie in DE 698 20 41 T2 dargestellt sind. In dieser Veröffentlichung wird ein Phasenversatz zwischen zwei Rädern erfasst, die relativ zueinander beweglich sind, und die einen Federmechanismus aufweisen. Die Erfassung erfordert jedoch Mittel wie optische oder magnetische Abtastung und geht mit einem "weichen" Antrieb einher, bei dem ein Drehmoment teilweise in eine Federbewegung umgesetzt wird, anstatt in die Fortbewegung. Zudem ist die erforderliche Datenauswertung aufwendig.

Die US 6 672 418 B1 betrifft ein Elektrofahrrad, das ein Differentialerfassungsgetriebe mit einer Kurbelwelle und einer Abtriebswelle, die mittels Freilauf verbunden sind, umfasst. Die Verbindung wird durch Federn realisiert. Und Dokument US 6672418 B1 offenbart den Oberbegriff des Anspruchs 1.

Die JP 2008-18936 A betrifft ein Elektrofahrrad, bei dem ein Hilfsmotor mit einer Kurbelwelle gekoppelt ist, mit der auch ein sensorseitiges Rad verbunden ist.

Die JP 2000-079895 A betrifft ein Elektrofahrrad mit einem Planetengetriebe, das aus Sonnenrädern, Planetenrädern und einem Träger besteht.

Die JP 55-063730 A betrifft eine Vorrichtung zum Erfassen eines Drehmoments.

Es ist daher eine Aufgabe der Erfindung, eine einfache Mechanik vorzusehen, um ein Drehmoment zu Erfassen, ohne auf fehleranfällige oder aufwändige Vorkehrungen zurückgreifen zu müssen.

### Offenbarung der Erfindung

Diese Aufgabe wird gelöst durch die Vorrichtung und das Verfahren nach den unabhängigen Ansprüchen.

Erfindungsgemäß wird das zu messende Drehmoment der Tretkurbel auf eine parallel zur Tretkurbelachse liegende Sensorachse übertragen. Anschließend wird das Drehmoment wieder zurück auf eine koaxial auf der Tretkurbelwelle drehbar gelagerte Abtriebswelle oder sich in Verlängerung der Tretkurbelwelle erstreckende Abtriebswelle geleitet. Da bei beiden Übertragungen Sensorgetriebe mit unterschiedlichen Übersetzungsverhältnissen verwendet werden, d.h. unterschiedliche Größen der beteiligten Räder, ergibt sich eine Gesamtkraft, die auf die Sensorachse wirkt und die mittels eines Kraftsensors erfasst wird. Die Gesamtkraft ist unmittelbar verknüpft mit den Übersetzungsverhältnissen (die konstant sind) und dem zu messenden Drehmoment. Die Gesamtkraft lässt sich anhand der folgenden Systembetrachtung herleiten: Aufgrund der Energieerhaltung müssen die Drehmomente unterschiedlich sein, die von den beiden Sensorgetrieben übertragen werden, da in gleicher Weise (nur reziprok) die Drehzahlen unterschiedlich sind (die Reibung ist hierbei vernachlässigt). Zwischen Tretkurbelwelle und Sensorwelle ergibt sich also durch dieses Ungleichgewicht eine Gesamtkraft, die in tangentialer Richtung der Drehmomentübertagung (d.h. Tangentialbewegung der Drehelemente der Sensorgetriebe) wirkt. Da die Sensorgetriebe die Drehbewegung an eine Hohlwelle weitergeben, die gemäß der Längserstreckung der Tretkurbelwelle verläuft, kann das erfindungsgemäße Getriebe auf einfache Weise in Systeme eingesetzt werden, bei denen von einer einzigen Tretkurbelwelle ausgegangen wird, die in der gleichen Achse sowohl mit den Tretkurbeln als auch mit einem Abtriebselement (z.B. ein Kettenblatt) vorgesehen ist. Die Erfindung kann somit in einfacher Weise in bekannte Systeme ohne weiteres integriert werden bzw. durch Austausch eingebracht werden.

Die Abtriebswelle bildet die Welle, von der eine Drehbewegung von der Tretkurbelwelle (angetrieben vom Tretkurbelantrieb) über das Sensorgetriebe übertragen wird, wobei die Abtriebswelle zum Anschluss an einen Abtrieb vorgesehen ist. Diese ist vorzugsweise als Hohlwelle ausgeführt, kann aber auch durch eine beliebige (Voll- oder Hohl-) Welle ausgebildet sein, die sich auf der gleichen Drehachse wie die Tretkurbelwelle erstreckt. Der Begriff Abtriebswelle in dieser Beschreibung wird teilweise als Synonym für Hohlwelle verwendet, da diese Ausprägung die bevorzugte ist, wobei jedoch allgemein für die Abtriebswelle auch andere Wellen verwendet werden können, soweit diese die gleiche Drehachse wie die Abtriebswelle aufweisen.

Die Erfindung betrifft ein Getriebe für Elektrofahrräder zur Erfassung eines Drehmoments, mit dem eine Tretkurbelwelle beaufschlagt ist. Das Getriebe weist auf: die Tretkurbelwelle, auf die das Drehmoment wirkt, und eine zum Anschluss an einen Abtrieb eingerichtete Hohlwelle, durch die sich die Tretkurbelwelle koaxial erstreckt. Diese Erstreckung verhindert Probleme durch einen Radialversatz. Die Hohlwelle ist drehbar zur Tretkurbelwelle gelagert, vorzugsweise durch ein Wälzlager im Inneren der Hohlwelle, die Hohlwelle und Tretkurbelwelle verbindet. Das Getriebe umfasst ferner eine radial zur Tretkurbelwelle versetzte Sensorwelle. Durch diesen Versatz wird eine Kraft an der Antriebseite (und eine Gegenkraft an der Abtriebseite) erzeugt, die auf die Sensorwelle wirkt. Das Getriebe umfasst zudem einen mit der Sensorwelle verbundenen Kraftsensor, der eine von der Sensorwelle ausgeübte Kraft erfasst, die dem zu erfassenden Drehmoment entspricht. Die Verbindung zwischen Sensorwelle und Kraftsensor kann mittelbar sein, beispielsweise durch Befestigen des Kraftsensors an einem Lager der Sensorwelle oder an einem Rahmen, der die Sensorwelle lagert.

Das Getriebe umfasst ferner ein antriebseitiges Sensorgetriebe und ein abtriebseitiges Sensorgetriebe. Das antriebseitige Sensorgetriebe verbindet die Tretkurbelwelle mit der Sensorwelle und das abtriebseitige Sensorgetriebe verbindet die Sensorwelle mit der Hohlwelle, um eine Drehbewegung zu übertragen. Die Hohlwelle ist eingerichtet mit einem Abtrieb verbunden zu werden, beispielsweise mittels Verbindungsabschnitte an den Enden der Hohlwelle, an die ein Kettenblatt montiert werden kann. Das antriebseitige Sensorgetriebe weist ein Übersetzungsverhältnis auf, das sich von dem Übersetzungsverhältnis des abtriebseitigen Sensorgetriebes unterscheidet. Dadurch sind Kraft und Gegenkraft nicht im Gleichgewicht und es gibt eine Gesamtkraft, die in einem festen Verhältnis zu dem übertragenen Drehmoment (bspw. bezogen auf das Drehmoment an der Tretkurbelwelle) steht. Das Verhältnis ist eine streng monotone, insbesondere lineare bzw. proportionale Abhängigkeit zwischen vom Kraftsensor sensierter Kraft und übertragenem Drehmoment. Der Verhältnisfaktor ist umso größer, je größer der Unterschied zwischen den beiden Übersetzungsverhältnissen der Sensorgetriebe ist.

Das erfindungsgemäße Getriebe sieht vor, dass das antriebseitige Sensorgetriebe ein antriebseitiges Tretkurbelwellenrad, das auf der Tretkurbelwelle angeordnet und fest mit dieser verbunden ist, sowie ein antriebseitiges Sensorwellenrad aufweist, das auf der Sensorwelle angeordnet und fest mit dieser verbunden ist. Das antriebseitige Sensorwellenrad und das Tretkurbelwellenrad greifen ineinander, um gemäß einem Zahnradgetriebe eine Drehbewegung von der Tretkurbelwelle an die Sensorwelle zu übertragen. Durch die Übertragung wird die Drehachse der Drehbewegung von der Längsachse Tretkurbelwelle radial nach außen zu der Drehachse der Sensorwelle versetzt. Das abtriebseitige Sensorgetriebe umfasst ein abtriebseitiges Hohlwellenrad, das auf der Hohlwelle angeordnet und mit diesem fest verbunden ist, sowie ein abtriebseitiges Sensorwellenrad, das auf der Sensorwelle angeordnet und fest mit dieser verbunden ist, beziehungsweise direkt mit dem antriebseitigen Sensorwellenrad fest verbunden ist. Das abtriebseitige Sensorwellenrad und das Hohlwellenrad greifen ineinander, um eine Drehbewegung von der Sensorwelle auf die Hohlwelle (d.h. den Abtrieb) zu übertragen.

Das erfindungsgemäße Getriebe umfasst des Weiteren einen Sensorrahmen, in dem die Sensorwelle drehbar gelagert ist. Der Kraftsensor ist einerseits mit dem Sensorrahmen und andererseits mittelbar oder unmittelbar mit einem Gehäuseelement verbunden ist, das die Tretkurbelwelle oder die Hohlwelle zumindest teilweise lagert. Ferner kann der Kraftsensor zwischen Sensorrahmen und einer Fläche vorgesehen sein, die auch mit der Tretkurbelwelle oder der Hohlwelle kraftübertragend verbunden ist. Dadurch kann der Sensor die Kraftdifferenz an dem Rahmen erfassen, die sich durch die unterschiedlichen Übersetzungsverhältnisse ergibt. Zudem ist es durch diese Lagerung möglich, dass ein nachgebender Kraftsensor verwendet wird, dessen Position sich bei unterschiedlichen Kräften ändert (zunehmender Federweg bei zunehmender Kraft), da der Rahmen und die Sensorgetriebe einen Versatz in bestimmten Grenzen zulassen, ohne dass sich die Performance der mechanischen Drehbewegungsübertragung durch das Getriebe ändert.

Das Getriebe kann vorsehen, dass das antriebseitige Sensorgetriebe, das abtriebseitige Sensorgetriebe oder beide Sensorgetriebe mindestens ein Getrieberad aufweisen, das als Zahnrad mit Außenverzahnungen ausgebildet sind. Alternativ kann das mindestens eine Getrieberad als Außenverzahnung der Tretkurbelwelle, der Sensorwelle oder der Hohlwelle vorgesehen sein. Weitere Möglichkeiten der Ausbildung sehen vor, dass das mindestens eine Getrieberad als Innenverzahnung der Tretkurbelwelle, der Sensorwelle oder der Hohlwelle ausgebildet ist. Diese Ausbildungen lassen sich kombinieren. Ein Getrieberad ist eingerichtet, eine Drehbewegung von der Tretkurbelwelle auf die Sensorwelle oder von der Sensorwelle auf die Hohlwelle zu übertragen, wobei die Übertragung mittelbar über weitere Radverbindungen vorgesehen sein kann.

Insbesondere kann das antriebseitige Sensorgetriebe von einem Paar ineinander greifender Zahnräder mit Außenverzahnung und das abtriebseitige Sensorgetriebe von einem Paar ineinander greifender Zahnräder ausgebildet sein. Das antriebseitige oder das abtriebseitige Sensorgetriebe kann von einem Paar von ineinander greifenden Außenverzahnungen ausgebildet sein. Zumindest eines der beiden Paare sieht eine ineinandergreifende Außenverzahnung vor als eine Verzahnung, die unmittelbar auf einer Außenseite der Tretkurbelwelle, der Sensorwelle oder der Hohlwelle ausgebildet ist. In diese Außenverzahnung greift die Verzahnung eines Zahnrads ein. Alternativ kann das antriebseitige Sensorgetriebe, das abtriebseitige Sensorgetriebe oder beide Sensorgetriebe jeweils von einem Paar Verzahnungen aufweisen. Hierbei ist eine Verzahnung des Paars eine Außenverzahnung eines Zahnrads, eine Außenverzahnung der Tretkurbelwelle, der Sensorwelle oder der Hohlwelle, oder eine Innenverzahnung eines Hohlrad. Die andere Verzahnung des Paars ist eine Außenverzahnung eines Zahnrads, das auf der Tretkurbelwelle, der Sensorwelle oder der Hohlwelle montiert ist, oder ist eine Außenverzahnung der Tretkurbelwelle, der Sensorwelle oder der Hohlwelle selbst. Diese Ausbildungen ermöglichen die Einsparung von Platz und Bauteilen.

Eine Variante des Getriebes sieht vor, dass das antriebseitige Sensorgetriebe gebildet wird von einem antriebsseitigem Kurbelantriebwellenrad, das auf der Tretkurbelwelle montiert ist, sowie von einer ersten Innenverzahnung eines Hohlrads, das als Hohlwellenstück die Sensorwelle bildet. Das abtriebseitige Sensorgetriebe wird gebildet von einem abtriebsseitigem Hohlwellenrad, das auf der als Abtriebswelle arbeitenden Hohlwelle montiert ist, und einer weiteren Innenverzahnung des Hohlrads, die axial zu der ersten Innenverzahnung versetzt ist. Die Innenverzahnungen sind über das Hohlrad miteinander verbunden. Die Innenverzahnungen weisen unterschiedliche Radien auf, die zu unterschiedlichen Übersetzungsverhältnissen führen. Das Hohlrad ersetzt in dieser Ausführung die Sensorwelle und verbindet die beiden Räder, die sich bei anderen Ausführungsformen der Erfindung gemeinsam auf der Sensorwelle befinden.

Das Übersetzungsverhältnis des antriebseitigen Sensorgetriebes kann dem Kehrwert des Übersetzungsverhältnisses des abtriebseitigen Sensorgetriebes entsprechen, so dass eine Gesamtübersetzung von 1 erreicht wird.

Der Kraftsensor kann beispielsweise ein Piezoelement oder ein kraftempfindliches Halbleiterelement sein. Ferner kann der Kraftsensor ein Federelement bzw. Verwindungselement und einen zugehöriger Wegmesser bzw. Winkelgeber umfassen, beispielsweise in Form eines Dehnungsmessstreifens, der auf einem elastisch verformbaren Körper angeordnet ist. Der Federweg der Feder kann ferner von einem Wegnehmer erfasst werden, beispielsweise einem Hallelement oder auch ein optischer Sensor, in Verbindung mit Markierungen magnetischer oder optischer Art.

Die Erfindung wird ferner vorgesehen in einem Verfahren zur Erfassung eines Drehmoments, mit dem eine Tretkurbelwelle beaufschlagt ist. Das Verfahren sieht die folgenden Schritte vor: Übertragen des Drehmoments von der Tretkurbelwelle auf eine Sensorwelle, die parallel zur Tretkurbelwelle versetzt ist, über ein antriebseitiges Sensorgetriebe, und Übertragen eines entsprechenden Drehmoments von der Sensorwelle auf eine mit einem Abtrieb verbundene Hohlwelle, die die gleiche Drehachse wie die Sensorwelle aufweist, über ein abtriebseitiges Sensorgetriebe. Das Übertragen wird über das antriebseitige Sensorgetriebe mit einer Übersetzung vorgesehen, die sich von der Übersetzung des abtriebseitigen Sensorgetriebes unterscheidet. Das Verfahren sieht ferner vor, eine Kraft, die auf die Sensorwelle wirkt, mittels eines Kraftsensors zu erfassen. Der Kraftsensor ist hierbei kraftübertragend mit der Sensorwelle verbunden. Der Betrag der erfassten Kraft gibt die Stärke des Drehmoments wieder.

Erfindungsgemäß ist die Sensorwelle, welche die Drehbewegung überträgt, in einem Sensorrahmen drehbar gelagert. Die Kraft wird erfindungsgemäß erfasst, indem der Kraftsensor den Sensorrahmen abstützt, um die Kraft zu erfassen, die aufgrund der Sensorwelle auf den Sensorrahmen wirkt.

Schließlich kann das Verfahren vorsehen, dass das Drehmoment über die Sensorgetriebe übertragen wird durch ineinandergreifende Außenverzahnungen von Zahnrädern oder von Zahnrädern und Außenverzahnungen einer der Wellen. Die Verzahnungen bzw. Zahnräder bilden das Sensorgetriebe. Die Verzahnungen sind Außenverzahnung eines Zahnrads oder einer Außenverzahnung einer der Wellen, die in eine Innenverzahnung eines Hohlrads, das die Sensorwelle vorsieht, eingreifen. Diese Möglichkeiten sind auch kombiniert einsetzbar.

Im Gegensatz zu zahlreichen bekannten Sensoren ermöglicht die Erfindung auch die Umkehrung des Drehsinns des Drehmoments, ohne dass eine Hysterese in der Messung entsteht.

### Kurze Beschreibung der Figuren

Ausführungsbeispiele der Erfindung sind in den Figuren dargestellt und werden in der nachfolgenden Beschreibung näher erläutert.

Es zeigen:
Figur 1 eine symbolhaft dargestellte Ausführungsform der Erfindung zur Erläuterung der Grundzüge;
Figur 2 eine erste Ausgestaltung des erfindungsgemäßen Getriebes,
Figur 3 eine zweite Ausgestaltung des erfindungsgemäßen Getriebes,
Figur 4 eine dritte Ausgestaltung des erfindungsgemäßen Getriebes,
Figur 5 eine vierte Ausgestaltung des erfindungsgemäßen Getriebes
   und
Figur 6 eine Abwandlung der Ausbildung nach Figur 5.

### Ausführungsbeispiele

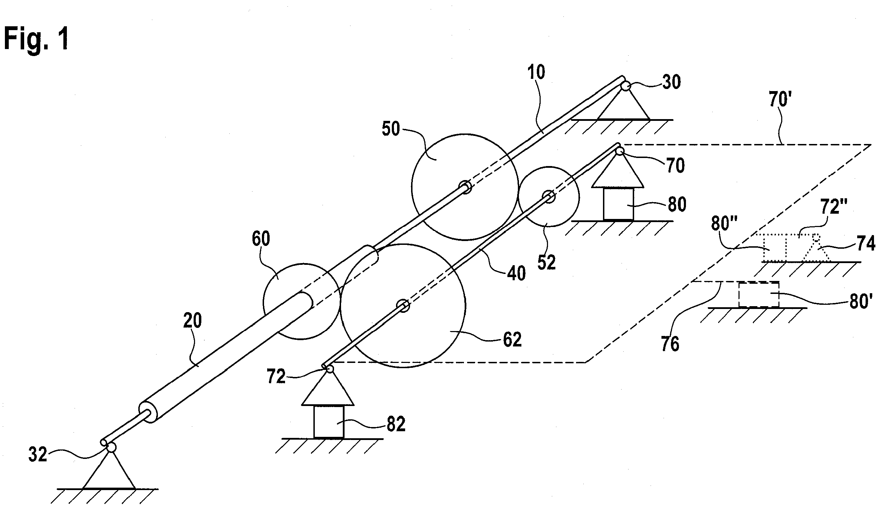

Figur 1 ist eine perspektivische Darstellung zur Erläuterung des Grundprinzips der Erfindung. Das in Fig. 1 dargestellte Getriebe umfasst eine Tretkurbelwelle 10, eine Hohlwelle bzw. Abtriebswelle 20 und eine Sensorwelle 40. Die Tretkurbelwelle 10 wird von Drehlagern 30, 32 gehalten, während die Hohlwelle mit nicht dargestellten Drehlagern auf der Tretkurbelwelle 10 drehbar gelagert wird. Auf der Tretkurbelwelle 10 ist ein antriebsseitiges Kurbelantriebwellenrad 50 befestigt, das in Eingriff mit einem antriebseitigen Sensorwellenrad 52 ist. Das antriebseitige Sensorwellenrad 52 ist ebenso wie ein abtriebseitiges Sensorwellenrad 62 auf der Sensorwelle 40 angeordnet. Das antriebseitige Kurbelantriebwellenrad 50 greift in das antriebseitige Sensorwellenrad 52 ein. Das abtriebseitige Sensorwellenrad 62 ist ebenso wie das Sensorwellenrad 52 auf der Sensorwelle 40 angeordnet. Das Sensorwellenrad 62 ist in Eingriff mit einem abtriebseitigen Hohlwellenrad 60, das drehfest auf der Hohlwelle 20 angeordnet ist. Die Hohlwelle 20 ist drehbar und konzentrisch auf der Tretkurbelwelle 10 angeordnet. Prinzipiell kann die Abtriebswelle (d. h. Hohlwelle 20) auch als Welle mit durchgängigem Querschnitt ausgebildet sein (nicht dargestellt), wobei die Abtriebswelle paralell zu der Tretkurbelwelle angeordnet ist. Die in Fig. 1 dargestellte Anordnung hat jedoch den Vorteil einer durchgängigen Tretkurbelwelle 10, die sich von Kurbel zu Kurbel erstreckt und ebenso die Hohlwelle 20 stützt. Es ist anhand der dargestellten Durchmesser der Wellenräder 50 - 62 zu erkennen, dass diese unterschiedliche Übersetzungsverhältnisse vorsehen, d. h. ein erstes Übersetzungsverhältnis zwischen den Wellenrädern 50 und 52 ist größer 1 und ein zweites Übersetzungsverhältnis zwischen den Wellenrädern 62 und 60 ist ebenfalls größer 1. Die Wellenräder 50 - 62 sehen ein Gesamtübersetzungsverhältnis von größer 1 vor, wobei dies allgemein nicht notwendigerweise der Fall ist. Vielmehr können die Räder 50 und 62 bzw. 60 und 52 allgemein unterschiedliche Größen aufweisen und dabei unterschiedliche Einzel- und Gesamtübersetzungen abbilden. Vorzugsweise haben die Räder 52 und 62 unterschiedliche Wirkdurchmesser.

Die Sensorwelle 40 ist mit Drehlagern 70, 72 verbunden, die gegenüber der Tretkurbelwelle 10 abgestützt ist. Das Drehlager 70 ist über einen Kraftsensor 80 mit einer diesen abstützenden Fläche 90 verbunden. Das Drehlager 72 ist über einen weiteren Kraftsensor 82 mit einer diesen abstützenden Fläche 90 verbunden. Die Fläche 90 ist Teil des Getriebegehäuses. Statt an einer Fläche 90 können sich die Kraftsensoren 80, 82 auch in Bohrungen oder anderen Elementen des Getriebegehäuses abstützen. Alternativ kann nur eines der Drehlager über einen Kraftsensor mit einer diesen abstützenden Fläche verbunden sein, während das andere Drehlager direkt, d. h. ohne Kraftsensor, abgestützt ist.

Eine alternative Lagerung ist mit Rahmen 70' gestrichelt dargestellt. Der Rahmen 70' ist über Drehlager 70, 72 mit der Sensorwelle 40 verbunden. Der Rahmen 70' ist über einen Kraftsensor 80' und eine zum Kraftsensor 80' führende Verbindung 76 abgestützt, wobei der zur Abstützung gehörende Lagerpunkt radial versetzt zu der Sensorwelle 40 angeordnet ist. Die Verbindung 76 ist drehfest mit dem Kraftsensor 80' verbunden. Bei dieser Ausführungsform ist der Rahmen 70' an der Seite der Tretkurbel nicht abgestützt.

Eine weitere alternative Lagerung, die mit Rahmen 70' ausgeführt ist (d. h. ohne dass eine Verbindung zu den Drehlagern 70, 72 besteht), sieht vor, dass an einem zur Sensorwelle 40 radial versetzten Lagerpunkt eine Verbindung 72" vorgesehen ist, die den Rahmen 70' mit einem Drehlager 74 verbindet. Ein Kraftsensor 80" ist zwischen der Verbindung 72" und einer Abstützung, die wieder Teil des Getriebegehäuses 90 ist, angeordnet. Der Kraftsensor 80" erfasst die Kraft, die sich bei Drehung der Verbindung 72" um das Drehlager 74 ergibt. Hierbei ist der Rahmen 70' an der Seite der Tretkurbel nicht abgestützt, vielmehr ist der Rahmen 70' im Drehlager 74 gelagert. Zur besseren Stabilisierung des Rahmens 70' können auch zwei oder mehrere Drehlager 74 an jeweils unterschiedlichen Stellen des Rahmens 70' vorhanden sein.

Statt eines Drehlagers 74 kann auch allgemein von einer Drehlagerung gesprochen werden.

Der Rahmen 70' umgreift beide Sensorgetriebe 50, 52 bzw. 60, 62, kann jedoch auch nur ein Sensorgetriebe umgreifen, wobei das andere Sensorgetriebe axial versetzt zu dem Rahmen angeordnet ist. Ferner kann der Rahmen die Sensorwelle nur seitlich tragen und bspw. als Kragarm ausgebildet sein, von dem sich in radialer Richtung die Sensorwelle weg erstreckt, wobei der Kragarm die Sensorwelle seitlich und drehbar lagert.

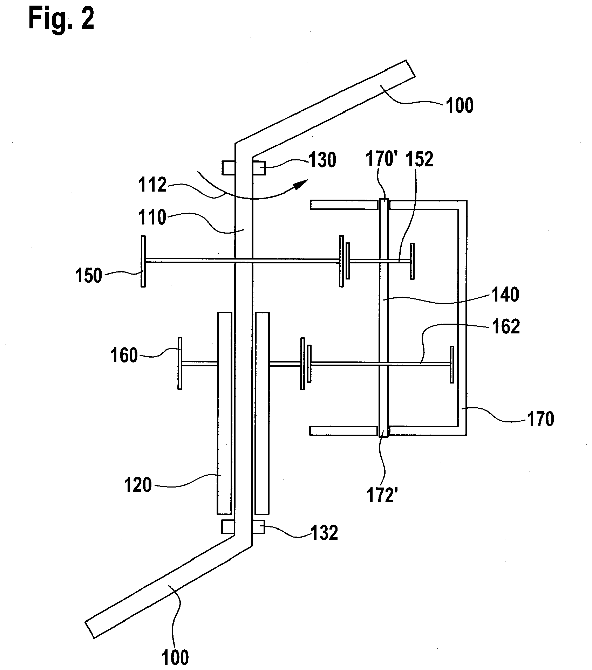

Die Figur 2 zeigt eine erste Ausgestaltung des erfindungsgemäßen Getriebes, mit Kurbeln 100, Kurbelwelle 110, die durch Lager 130, 132 drehbar gelagert ist, um eine Drehung gemäß Pfeil 112 ausführen zu können. Auf der Kurbelwelle 110 sind das antriebseitige Kurbelantriebwellenrad 150 drehfest und das abtriebseitige Hohlwellenrad 160 drehbar angeordnet. Die Sensorwelle 140 weist antriebseitiges Sensorwellenrad 152 und ein abtriebseitiges Sensorwellenrad 162 auf, die mit den Rädern 150 bzw. 160 in Eingriff sind. Der Rahmen hat eine U-förmige Erstreckung, wobei die beiden gegenüberliegenden Schenkel die Drehlager 170', 172' aufweisen. Die Sensorwelle ist in einem Rahmen 170 durch Drehlager 170', 172' drehbar gelagert. Die Kraft wird von einem nicht dargestellten Kraftsensor gemessen, über den der Rahmen 170 gelagert ist. Die nicht dargestellte Lagerung, über die der Kraftsensor den Rahmen hält, nimmt Kräfte in Tangentialrichtung (bezogen auf die Drehung der Sensorwelle oder der Tretkurbelwelle) auf. Das abtriebseitige Sensorgetriebe wird gebildet durch die Räder 160, 162, und das antriebseitige Sensorgetriebe wird gebildet durch die Räder 150, 152. Der Kehrwert der Übertragungsverhältnisses des abtriebseitigen Sensorgetriebes unterscheidet sich von dem Übertragungsverhältnisses des antriebseitigen Sensorgetriebes, wodurch sich eine (wählbare) Gesamtübersetzung zwischen Kurbelwelle 110 und Abtriebswelle 120 (als Hohlwelle ausgeführt) ergibt. Der Rahmen umgreift beide Sensorgetriebe.

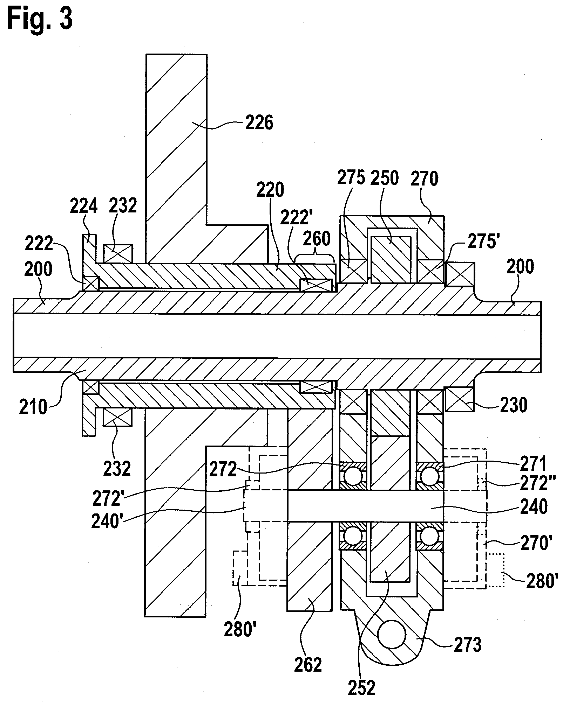

Die Figur 3 zeigt eine zweite Ausgestaltung des erfindungsgemäßen Getriebes, mit einer Tretkurbelwelle bzw. Kurbelwelle 210, an deren Enden Befestigungselemente 200 für Tretkurbeln vorgesehen sind. Auf der Kurbelwelle 210 ist eine Hohlwelle 220 über Drehlager 222 und 222' drehbar gelagert. Die Kurbelwelle ist an einer Seite durch ein Drehlager 230 gelagert und auf der anderen Seite durch ein Drehlager 232 gelagert, das sich auf der Hohlwelle befindet, wobei über das Drehlager 222 zwischen Hohlwelle 220 und Kurbelwelle 210 damit auch die Kurbelwelle gelagert ist. Die Hohlwelle 220 weist an einem Ende eine sich radial erstreckende Wulst 224 auf, die Befestigungselemente (nicht dargestellt) für den Abtrieb vorsieht.

Über Drehlager 275 und 275' ist auf der Tretkurbel ein Rahmen 270 befestigt, der eine Sensorwelle 240 über Drehlager 271, 272 trägt. Auf der Sensorwelle 240 sind ein erstes Rad 252 (antriebseitiges Sensorwellenrad) und ein zweites Rad 262 (abtriebseitiges Sensorwellenrad) befestigt, wobei nur eines der Räder (Rad 252) von dem Rahmen umgeben ist und das andere Rad 262 sich neben dem Rahmen befindet, wobei die Sensorwelle sich auch seitlich (d.h. axial) von dem Rahmen 270 erstreckt, um dort das andere Rad 262 drehbar zu lagern. Das erste Rad 252 der Sensorwelle 240 ist in Eingriff mit einem antriebseitigen Kurbelantriebwellenrad 250, das drehfest mit der Tretkurbelwelle 210 verbunden ist. Das zweite Rad 262, das sich außerhalb des Rahmens befindet, ist in Eingriff mit einer Verzahnung 260 der Hohlwelle. Die Verzahnung 260 der Hohlwelle 220 bildet ein Zahnrad, wobei die Verzahnung in der Außenfläche der Hohlwelle angeordnet ist. Es ergibt sich eine Einsparung an Elementen sowie ein geringer Durchmesser für die Verzahnung 260, die als abtriebseitiges Hohlwellenrad angesehen werden kann, das einteilig mit der Hohlwelle 260 ausgebildet ist. Ein Abtriebrad (d.h. ein Kettenrad zur Verbindung mit dem Laufrad des Fahrrads) 224 ist auf der Hohlwelle 220 drehfest angeordnet. Auf der Hohlwelle 220 ist ferner ein Abtriebelement in Form eines Zahnrades 226 angeordnet über das ein zusätzliches Drehmoment eines Motors auf die Hohlwelle 220 gebracht werden kann.

Zur Krafterfassung weist der Rahmen ein Sensorrahmenlager 273 auf, an dem eine Kraft auftritt, die das übertragene Drehmoment wiedergibt. Das Sensorrahmenlager 273 ist als Befestigungselement ausgeführt an einem Ende des Sensorrahmens 270, das sich entfernt gelegen zu der Kurbelwelle befindet. Ein Kraftsensor (nicht dargestellt) ist mit dem Sensorrahmenlager 273 verbunden. Sensorrahmenlager 273 entspricht den Lagern 72", 76 des Getriebes, das in Fig. 1 dargestellt ist.

Eine alternative Ausführung des Sensorrahmens ist in Fig. 3 gestrichelt dargestellt. Der Sensorrahmen (gestrichelt dargestellt) umgreift in der alternativen Ausführung beide Räder 262, 252, die auf der Sensorwelle 240' angeordnet sind, wobei die Sensorwelle 240' von Drehlagern 272' und 272", die in dem Rahmen vorgesehen sind, drehbar gelagert wird. Die Sensorwelle 240' ist länger als die Sensorwelle und erstreckt sich von einer Rahmenseite zur anderen Rahmenseite. Der Rahmen umfasst Drehpunktelemente 280', die zu beiden Axialseiten des Rahmens an einer Seite des Rahmens angeordnet sind, der von der Kurbelwelle in Radialrichtung entfernt gelegen ist. Die Drehpunktelemente 280' sind einteilig mit dem Rahmen ausgebildet. Die Drehpunktelemente 280' sind zylinderförmig (wobei die Höhe in der Größenordnung des Radius ist) und werden drehbar in einem Gehäuse gelagert, das auch die Tretkurbelwelle (und die Hohlwelle) mittelbar oder unmittelbar lagert. Die Lagerung umfasst einen Kraftsensor, der eine Tangentialkraft (bezogen auf die Tretkurbelwelle) erfasst. Wenn ein nachgiebiger Kraftsensor (mit Federweg) verwendet wird, so kippt der Rahmen leicht in der Drehrichtung, die die Drehpunktelemente 280' vorgeben. Dies ermöglicht einen Ausgleich, ohne dass das Getriebe Schaden nimmt. Der Kraftsensor ist an dem Rahmen an einer Stelle befestigt, die radial (bezogen auf die Drehachse, die die Drehpunktelemente 280' vorgeben) zu den Drehpunktelementen 280' versetzt ist. Alternativ kann als Kraftsensor auch ein Drehmomentsensor verwendet werden, der die Drehpunktelemente 280' drehfest lagert. Der Rahmen ist beabstandet zum Zahnrad 226 angeordnet, um eine freie Rotation des Zahnrads 226 zu ermöglichen, und um eine leichte Kippbewegung des Rahmens um die Welle 210 herum zu ermöglichen, die dem Federhub eines Kraftsensors bei unterschiedlichen Belastungen entspricht. Der Rahmen kann zum Zahnrad in Längsrichtung der Welle 210 versetzt sein, um diese freien Bewegungen zu gewährleisten.

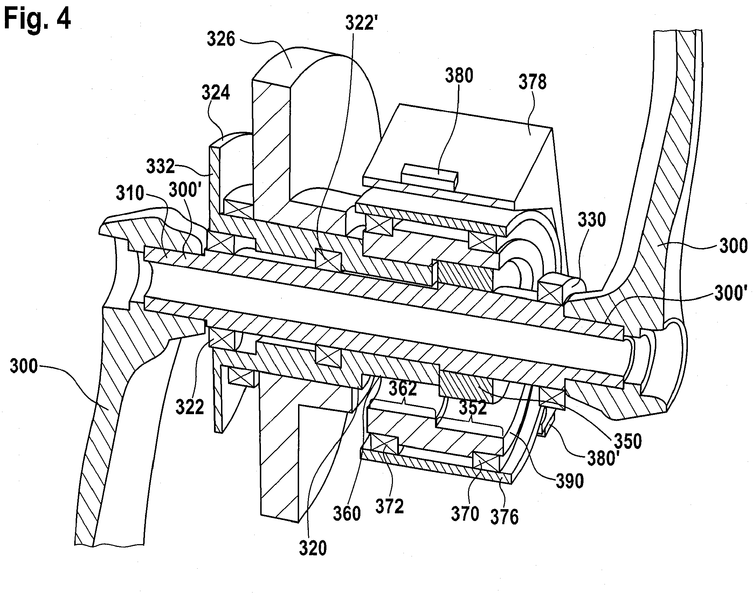

Die Figur 4 zeigt eine dritte Ausgestaltung des erfindungsgemäßen Getriebes, mit einer Tretkurbelwelle bzw. Kurbelwelle 310, an der an Befestigungsstellen 300' Kurbel 300 an beiden Enden der Kurbelwelle 310 angeordnet sind. Auf der Kurbelwelle 310 ist eine Hohlwelle 320 über axial zueinander versetzte Drehlager 322, 322' drehbar gelagert. Die Hohlwelle 320 weist an einem Ende, das entgegengesetzt ist zu dem Ende der Hohlwelle, das dem Sensorgetriebe zugewandt ist, eine Verbindungsmöglichkeit (in Form einer Wulst 324) für ein Kettenrad 324 zum Antrieb eines Hinterrads des Fahrrads auf. Auf der Hohlwelle 320 ist ferner ein Abtriebelement in Form eines Zahnrades 326 angeordnet über das ein zusätzliches Drehmoment eines Motors auf die Hohlwelle 320 gebracht werden kann. Ein Drehlager 332 lagert die Hohlwelle 320 (und somit auch die Kurbelwelle 310) an einem Ende der Kurbelwelle 310, und ein Drehlager 330 lagert die Kurbelwelle 310 an dem dazu entgegengesetzten Ende der Kurbelwelle 310.

Auf der Kurbelwelle 310 ist ein damit fest verbundenes antriebseitiges Kurbelantriebwellenrad angeordnet, das in eine Innenverzahnung 352 eingreift, die als ein antriebseitiges Sensorwellenrad betrachtet werden kann. Die Innenverzahnung 352 ist in der Innenseite eines Hohlrads 390 angeordnet. Die Innenseite des Hohlrads weist ferner eine Innenverzahnung 362 auf, die als ein abtriebseitiges Sensorwellenrad betrachtet werden kann. Das dem Sensorgetriebe zugewandte Ende der Hohlwelle weist eine Außenverzahnung 360 auf, die als abtriebseitiges Hohlwellenrad wirkt, und die mit der Innenverzahnung 362 in Eingriff ist. Die Innenverzahnung 352 ist axial versetzt zu der Innenverzahnung 362 angeordnet. Die Innenverzahnung 352 und die Innenverzahnung 362 weisen unterschiedliche Durchmesser auf. Die Radien der Innenverzahnungen und die Radien der Außenverzahnung 360 bzw. des Zahnrads 350 sind in weiten Grenzen frei wählbar, solange sich unterschiedliche Übersetzungsverhältnisse ergeben. Zwischen der Innenseite der Hohlwelle 320 und der Außenseite der Tretkurbel ist eine durchgehende Lücke, insbesondere in der Höhe der Außenverzahnung 360, die eine Drehung gegenüber der Tretkurbelwelle 310 ermöglicht. Die Lücke ist insbesondere in Figur 4 in der oberen Hälfte der Darstellung ersichtlich. Die Innenverzahnungen 362 und 352 sind drehfest miteinander verbunden, insbesondere durch einteilige Ausführung mit dem Hohlrad 390. Dadurch bildet das Hohlrad 390 auch die Sensorachse, die hier im Sinne einer kurzen Hohlwelle ausgeführt ist.

Das Hohlrad 390 wird an seiner Außenseite von radial zueinander versetzten Drehlagern 370, 372 gegenüber einer äußeren Lagerhülse 376 des Hohlradlagers gelagert. Auf der Außenseite der Lagerhülse 376 ist ein Rahmen 378 vorgesehen, der die Lagerhülse umgibt und kraftübertragen mit dieser verbunden ist. Auf der Lagerhülse ist ein Kraftsensor 380, 380' angeordnet, wobei der Kraftsensor 380 eine Alternative zu Kraftsensor 380' ist und umgekehrt. Durch die unterschiedlichen Übertragungsverhältnisse wird eine Kraft erzeugt, die in radialer Richtung (bezogen auf die Drehachse der Tretkurbel) wirkt. Die Kraft wirkt senkrecht zu der Ebene, in der die Kontaktlinie der sensorwellenseitigen Verzahnungen und der kurbelwellenseitigen Verzahnungen (d.h. die Verzahnung des Sensorgetriebes) sowie die Drehachse der Kurbelwelle (und der Abtriebswelle) liegt. Der Kraftsensor 380 oder 380' verbindet (mittelbar oder unmittelbar) einen äußeren Träger (nicht dargestellt) mit dem Rahmen 378, wobei der Träger ebenso (mittelbar oder unmittelbar) mit den Lagern 330, 332 der Kurbelwelle 310 bzw. der Abtriebswelle 320 in kraftübertragender Verbindung ist.

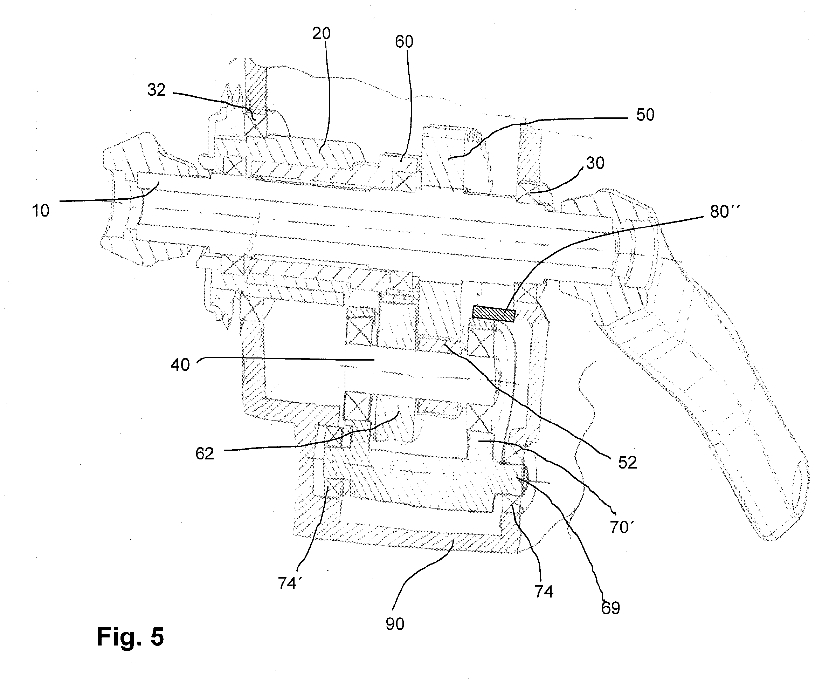

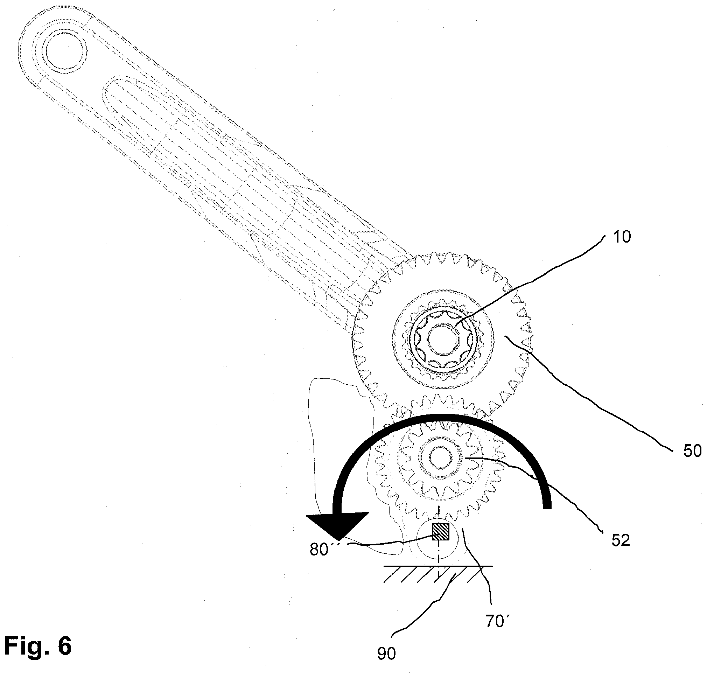

In der Figur 5 und in der Figur 6 ist die konstruktive Ausgestaltung der Variante nach Figur 1 mit dem zwischen der Verbindung 72 und einer Abstützung 90 angeordneten Kraftsensor 80" und eine entsprechende Abwandlung hierzu dargestellt. Zum besseren Verständnis sind die Bezugsziffern aus der Figur 1 in die konstruktive Darstellung nach Figur 5 bzw. Figur 6 übernommen worden. Im Getriebegehäuse 90 ist der Rahmen 70' mit Hilfe der Drehlager 74 und 74' drehbar gelagert. Im Rahmen 70' ist ferner die Sensorwelle 40 über die Drehlager 70" gelagert. Auf der Sensorwelle 40 sind wie bereits in Figur 1 erläutert, die Zahnräder (Sensorgetriebe) 52, 62 angeordnet, die in Wirkverbindung mit den auf der Tretkurbelwelle 10 befindlichen Zahnräder (Sensorgetriebe) 50, 60 stehen. Die Zahnräder 52 und 62 sind kraftübertragend miteinander verbunden. Der Kraftfluss erfolgt von der Tretkurbelwelle 10 über die Zahnräder 50, 52, 62 und 60 auf die Abtriebswelle 20. Die Lagerung der Tretkurbelwelle 10 ist über die Drehlager 30 und 32 ausgeführt. Der bereits in der Figur 1 dargestellte Kraftsensor 80" ist so zwischen dem Rahmen 70' und dem Getriebegehäuse 90 angeordnet, dass er eine Abstützung des Rahmens 70' zum Getriebegehäuse 90 ermöglicht und so bei Krafteinwirkung ein Verdrehen des Rahmens 70' um die Drehachse der Drehlager 74, 74' verhindert. Das bedeutet, dass der Kraftsensor 80" zwischen dem Getriebegehäuse 90 und dem Rahmen 70' so angeordnet ist, dass er die relative Bewegung dieser beiden Teile in Form einer Biegung erfasst. Diese Durchbiegung des Kraftsensors 80" kann mit Hilfe eines oder von Hall-Elementen erfasst werden. Denkbar sind aber auch alle anderen Sensoren zur Krafterfassung. Als Bespiel sei hier eine Wheatstone Brücke genannt. Die Anordnung des Kraftsensors 80" ist in der Figur 5 im Bereich des Drehlagers der Sensorwelle 40 zwischen Rahmen 70' und Sensorgehäuse 90 dargestellt. Durch diese Anordnung des Kraftsensors 80" würde sich eine relativ große Durchbiegung und somit ein sehr gutes Messsignal ergeben. Der Kraftsensor 80" wäre in diesem Fall möglichst weit von der Drehachse 69 des Rahmens 70'entfernt. Abhängig von den Einbauverhältnissen wäre auch ein anderer Ort für den Kraftsensors 80" denkbar. Das Sensorsignal des Kraftsensors 80" wird nun verwendet, um den Elektromotor zu regeln bzw. zu steuern. Das Sensorsignal hat hierbei im eigentlichen Sinne das vom Fahrer erzeugte Drehmoment erfaßt und wird so zur Regelung bzw. Steuerung des Elektromotors verrwendet.

In der Figur 6 ist nun eine nicht erfindungsgemäße Abwandlung nach der Figur 5 dargestellt. In Figur 6 ist der Rahmen 70' direkt mit dem Getriebegehäuse 90 fest verbunden. Dies bedeutet, die in der Figur 5 bzw. in der Figur 1 dargestellten Drehlager 74 und 74' sind hier nicht verwendet bzw. ausgebildet. Der Kraftsensor 80" ist in der Darstellung nach der Figur 6 nun direkt am Rahmen 70' angeordnet und hat keine Verbindung zum Getriebegehäuse 90. Der Kraftsensor 80" misst nun die sogenannten inneren Kräfte, die auf den Rahmen 70' wirken. Seine Messsignale werden wie auch bei der Figur 5 verwendet.

Die Bezugszeichen der unterschiedlichen Figuren, welche sich bis auf die erste Stelle (über dreistellige Bezugszeichen) gleichen, betreffen die gleichen Merkmale und Komponenten, wobei die in der Beschreibung dargelegten Eigenschaften für alle Komponenten gelten, die mit Bezugszeichen gekennzeichnet sind, die sich gleichen.

In der Figur 5 und in der Figur 6 ist die konstruktive Ausgestaltung der Variante nach Figur 1 mit dem zwischen der Verbindung 72 und einer Abstützung 90 angeordneten Kraftsensor 80" und eine entsprechende Abwandlung hierzu dargestellt. Zum besseren Verständnis sind die Bezugsziffern aus der Figur 1 in die konstruktive Darstellung nach Figur 5 bzw. Figur 6 übernommen worden. Im Getriebegehäuse 90 ist der Rahmen 70' mit Hilfe der Drehlager 74 und 74' drehbar gelagert. Im Rahmen 70' ist ferner die Sensorwelle 40 über die Drehlager 70" gelagert. Auf der Sensorwelle 40 sind wie bereits in Figur 1 erläutert, die Zahnräder (Sensorgetriebe) 52, 62 angeordnet, die in Wirkverbindung mit den auf der Tretkurbelwelle 10 befindlichen Zahnräder (Sensorgetriebe) 50, 60 stehen. Die Zahnräder 52 und 62 sind kraftübertragend miteinander verbunden. Der Kraftfluss erfolgt von der Tretkurbelwelle 10 über die Zahnräder 50, 52, 62 und 60 auf die Abtriebswelle 20. Die Lagerung der Tretkurbelwelle 10 ist über die Drehlager 30 und 32 ausgeführt. Der bereits in der Figur 1 dargestellte Kraftsensor 80" ist so zwischen dem Rahmen 70' und dem Getriebegehäuse 90 angeordnet, dass er eine Abstützung des Rahmens 70' zum Getriebegehäuse 90 ermöglicht und so bei Krafteinwirkung ein Verdrehen des Rahmens 70' um die Drehachse der Drehlager 74, 74' verhindert. Das bedeutet, dass der Kraftsensor 80" zwischen dem Getriebegehäuse 90 und dem Rahmen 70' so angeordnet ist, dass er die relative Bewegung dieser beiden Teile in Form einer Biegung erfasst. Diese Durchbiegung des Kraftsensors 80" kann mit Hilfe eines oder von Hall-Elementen erfasst werden. Denkbar sind aber auch alle anderen Sensoren zur Krafterfassung. Als Bespiel sei hier eine Wheatstone Brücke genannt. Die Anordnung des Kraftsensors 80" ist in der Figur 5 im Bereich des Drehlagers der Sensorwelle 40 zwischen Rahmen 70' und Sensorgehäuse 90 dargestellt. Durch diese Anordnung des Kraftsensors 80" würde sich eine relativ große Durchbiegung und somit ein sehr gutes Messsignal ergeben. Der Kraftsensor 80" wäre in diesem Fall möglichst weit von der Drehachse 69 des Rahmens 70'entfernt. Abhängig von den Einbauverhältnissen wäre auch ein anderer Ort für den Kraftsensors 80" denkbar. Das Sensorsignal des Kraftsensors 80" wird nun verwendet, um den Elektromotor zu regeln bzw. zu steuern. Das Sensorsignal hat hierbei im eigentlichen Sinne das vom Fahrer erzeugte Drehmoment erfaßt und wird so zur Regelung bzw. Steuerung des Elektromotors verrwendet. In der Figur 6 ist nun eine Abwandlung nach der Figur 5 dargestellt. In Figur 6 ist der Rahmen 70' direkt mit dem Getriebegehäuse 90 fest verbunden. Dies bedeutet, die in der Figur 5 bzw. in der Figur 1 dargestellten Drehlager 74 und 74' sind hier nicht verwendet bzw. ausgebildet. Der Kraftsensor 80" ist in der Darstellung nach der Figur 6 nun direkt am Rahmen 70' angeordnet und hat keine Verbindung zum Getriebegehäuse 90. Der Kraftsensor 80" misst nun die sogenannten inneren Kräfte, die auf den Rahmen 70' wirken. Seine Messsignale werden wie auch bei der Figur 5 verwendet.

Die Bezugszeichen der unterschiedlichen Figuren, welche sich bis auf die erste Stelle (über dreistellige Bezugszeichen) gleichen, betreffen die gleichen Merkmale und Komponenten, wobei die in der Beschreibung dargelegten Eigenschaften für alle Komponenten gelten, die mit Bezugszeichen gekennzeichnet sind, die sich gleichen.

## Patentansprüche

1. Getriebe für Elektrofahrräder zur Erfassung eines Drehmoments, mit dem eine Tretkurbelwelle beaufschlagt ist, wobei das Getriebe aufweist: die Tretkurbelwelle, auf die das Drehmoment wirkt, eine zum Anschluss an einen Abtrieb eingerichtete Abtriebswelle (20), eine parallel zur Tretkurbelwelle (10) versetzte Sensorwelle (40), und einen mit der Sensorwelle (40) verbundenen Kraftsensor (80, 82, 80', 80"), der eine von der Sensorwelle (40) ausgeübte Kraft erfasst, die dem zu erfassenden Drehmoment entspricht, wobei das Getriebe ferner ein antriebseitiges Sensorgetriebe (50, 52) und ein abtriebseitiges Sensorgetriebe (60, 62) umfasst, das antriebseitige Sensorgetriebe (50, 52) die Tretkurbelwelle (10) mit der Sensorwelle (40) verbindet und das abtriebseitige Sensorgetriebe (60, 62) die Sensorwelle (40) mit der Abtriebswelle (20) verbindet, die Abtriebswelle (20) eingerichtet ist, mit einem Abtrieb verbunden zu werden, und das antriebseitige Sensorgetriebe (50, 52) ein Übersetzungsverhältnis aufweist, das sich von dem Übersetzungsverhältnis des abtriebseitigen Sensorgetriebes (60, 62) unterscheidet,
und das antriebseitige Sensorgetriebe ein antriebseitiges Tretkurbelwellenrad (50), das auf der Tretkurbelwelle (10) angeordnet und fest mit dieser verbunden ist, und ein antriebseitiges Sensorwellenrad (52) aufweist, das auf der Sensorwelle (40) angeordnet und fest mit dieser verbunden ist, wobei das antriebseitige Sensorwellenrad (52) und das Tretkurbelwellenrad (50) ineinander eingreifen, und das abtriebseitige Sensorgetriebe ein abtriebseitiges Hohlwellenrad (60), das auf der Abtriebswelle bzw. Hohlwelle (20) angeordnet und mit diesem fest verbunden ist, sowie ein abtriebseitiges Sensorwellenrad (62) umfasst, das auf der Sensorwelle (40) angeordnet und fest mit dieser verbunden ist, wobei das abtriebseitige Sensorwellenrad (62) und das Hohlwellenrad (60) ineinander eingreifen, **dadurch gekennzeichnet, dass** das Getriebe einen Sensorrahmen (70') umfasst, der mit Hilfe einer Lagerung (74, 74') im Gehäuse 90 des Getriebes gelagert ist und wobei im Sensorrahmen (70') die Sensorwelle (40) drehbar gelagert ist, wobei der Kraftsensor (80") zwischen dem Sensorrahmen (70') und dem Gehäuse (90) des Getriebes derart angeordnet ist, dass er die tangentiale Kraft, die auf den Sensorrahmen (70') wirkt, erfasst und eine Drehbewegung des Sensorrahmens (70') verhindert.

2. Getriebe nach Anspruch 1, wobei die Abtriebswelle als Hohlwelle (20) ausgeführt ist, durch die sich die Tretkurbelwelle (10) koaxial erstreckt, und die drehbar zur Tretkurbelwelle (10) gelagert ist.

3. Getriebe nach einem der vorhergehenden Ansprüche, **dadurch gekennzeichnet, dass** der Kraftsensor (80") mit einem Abstand von der Drehachse des Sensorrahmens (70') entfernt angeordnet ist.

4. Getriebe nach einem der vorangehenden Ansprüche, wobei das antriebseitige Sensorgetriebe, das abtriebseitiges Sensorgetriebe oder beide Sensorgetriebe Getrieberäder aufweisen, die als Zahnrad mit Außenverzahnungen, als Außenverzahnungen der Tretkurbelwelle, der Sensorwelle oder der Abtriebswelle bzw. Hohlwelle, als Innenverzahnungen der Tretkurbelwelle, der Sensorwelle oder der Abtriebswelle bzw. Hohlwelle oder eine Kombination hiervon ausgebildet sind.

5. Getriebe nach Anspruch 4, wobei das antriebseitige Sensorgetriebe von einem Paar ineinander greifender Zahnräder mit Außenverzahnung (150, 152) und das abtriebseitige Sensorgetriebe von einem Paar ineinander greifender Zahnräder (160, 162) ausgebildet ist, das antriebseitige oder das abtriebseitige Sensorgetriebe von einem Paar von ineinander greifenden Außenverzahnungen ausgebildet ist, wobei zumindest eines der beiden Paare ineinandergreifender Außenverzahnungen eine Verzahnung (260) umfasst, die unmittelbar auf einer Außenseite der Tretkurbelwelle, der Sensorwelle oder der Abtriebswelle bzw. Hohlwelle ausgebildet ist, in die die Verzahnung eines Zahnrads (250) eingreift, oder wobei das antriebseitige Sensorgetriebe, das abtriebseitige Sensorgetriebe oder beide Sensorgetriebe jeweils von einem Paar Verzahnungen gebildet werden, wobei eine Verzahnung des Paars eine Außenverzahnung eines Zahnrads (350), eine Außenverzahnung (360) der Tretkurbelwelle, der Sensorwelle oder der Abtriebswelle bzw. Hohlwelle, oder eine Innenverzahnung (352, 362) eines Hohlrads (390) ist, und die andere Verzahnung des Paars eine Außenverzahnung eines Zahnrads (350) ist, das auf der Tretkurbelwelle, der Sensorwelle oder der Abtriebswelle bzw. Hohlwelle montiert ist, oder eine Außenverzahnung (360) der Tretkurbelwelle, der Sensorwelle oder der Abtriebswelle bzw. Hohlwelle selbst ist.

6. Getriebe nach Anspruch 4 oder 5, wobei das antriebseitige Sensorgetriebe gebildet wird von einem antriebsseitigem Kurbelantriebwellenrad (350), das auf der Tretkurbelwelle (10) montiert ist, und einer ersten Innenverzahnung (352) eines Hohlrads (390), das als Hohlwellenstück die Sensorwelle bildet, und das abtriebseitige Sensorgetriebe gebildet wird von einem abtriebsseitigem Hohlwellenrad (360), das auf der als Abtriebswelle arbeitende Hohlwelle angeordnet ist, und einer weiteren Innenverzahnung (362) des Hohlrads, die axial zu der ersten Innenverzahnung (352) versetzt ist, wobei die Innenverzahnungen über das Hohlrad (390) miteinander verbunden sind und die Innenverzahnungen unterschiedliche Radien aufweisen.

7. Getriebe nach einem der vorangehenden Ansprüche, wobei das Übersetzungsverhältnis des antriebseitigen Sensorgetriebes dem Kehrwert des Übersetzungsverhältnisses des abtriebseitigen Sensorgetriebes entspricht.

8. Verfahren zu Erfassung eines Drehmoments eines Getriebe nach einem der vorangehenden Ansprüche, mit dem eine Tretkurbelwelle (10) beaufschlagt ist, mit den Schritten: Übertragen des Drehmoments von der Tretkurbelwelle (10) auf eine Sensorwelle (40), die parallel zur Tretkurbelwelle (10) versetzt ist, über ein antriebseitiges Sensorgetriebe (50, 52), Übertragen eines entsprechenden Drehmoments von der Sensorwelle (40) auf eine mit einem Abtrieb verbundene Abtriebswelle bzw. Hohlwelle (20), die die gleiche Drehachse wie die Tretkurbelwelle (10) aufweist, über ein abtriebseitiges Sensorgetriebe (60, 62), wobei das Übertragen über das antriebseitige Sensorgetriebe mit einer Übersetzung vorgesehen wird, die sich von der Übersetzung des abtriebseitigen Sensorgetriebes unterscheidet, wobei das Verfahren ferner vorsieht, eine Kraft, die auf die Sensorwelle (40) wirkt, mittels eines Kraftsensors (70, 72, 80', 80") zu erfassen, der kraftübertragend mit der Sensorwelle (40) verbunden ist, wobei der Betrag der erfassten Kraft die Stärke des Drehmoments wiedergibt, wobei die Sensorwelle (40) in einem Sensorrahmen (70') drehbar gelagert ist und die Kraft erfasst wird, indem der Kraftsensor den Sensorrahmen (70') abstützt, um die Kraft zu erfassen, die durch die Sensorwelle (40) auf den Sensorrahmen (70') wirkt.

9. Verfahren nach Anspruch 8, wobei das Drehmoment über die Sensorgetriebe übertragen wird durch ineinandergreifende Außenverzahnungen von Zahnrädern (50 -62) oder von Zahnrädern und Außenverzahnungen (260; 360) einer der Wellen, wobei die Verzahnungen bzw. Zahnräder das Sensorgetriebe bilden, durch eine Außenverzahnung eines Zahnrads (50 - 62) oder einer Außenverzahnungen einer der Wellen in eine Innenverzahnung (352, 362) eines Hohlrads, das die Sensorwelle vorsieht, oder einer Kombination hiervon.

## Claims

1. Transmission for electric bicycles for detecting a torque which is applied to a pedal crankshaft, wherein the transmission has: the pedal crankshaft on which the torque acts, an output shaft (20) which is designed for connection to an output, a sensor shaft (40) which is offset parallel to the pedal crankshaft (10), and a force sensor (80, 82, 80', 80'') which is connected to the sensor shaft (40) and senses a force which is applied by the sensor shaft (40) and corresponds to the torque to be sensed, wherein the transmission also comprises a drive-side sensor transmission (50, 52) and an output-side sensor transmission (60, 62), the drive-side sensor transmission (50, 52) connects the pedal crankshaft (10) to the sensor shaft (40), and the output-side sensor transmission (60, 62) connects the sensor shaft (40) to the output shaft (20), the output shaft (20) is configured to be connected to an output, and the drive-side sensor transmission (50, 52) has a transmission ratio which differs from the transmission ratio of the output-side sensor transmission (60, 62),
and
the drive-side sensor transmission has a drive-side pedal crankshaft gear (50) which is arranged on the pedal crankshaft (10) and is securely connected thereto, and a drive-side sensor shaft gear (52) which is arranged on the sensor shaft (40) and is securely connected thereto, wherein the drive-side sensor shaft gear (52) and the pedal crank shaft gear (50) engage one in the other, and the output-side sensor transmission comprises an output-side hollow shaft gear (60), which is arranged on the output shaft or hollow shaft (20) and is securely connected thereto, and an output-side sensor shaft gear (62) which is arranged on the sensor shaft (40) and is securely connected thereto, wherein the output-side sensor shaft gear (62) and the hollow shaft gear (60) engage one in the other, **characterized in that** the transmission comprises a sensor frame (70') which is mounted using a mount (74, 74') in the housing (90) of the transmission, and wherein the sensor shaft (40) is rotatably mounted in the sensor frame (70'), wherein the force sensor (80") is arranged between the sensor frame (70') and the housing (90) of the transmission in such a way that it senses the tangential force acting on the sensor frame (70') and prevents a rotational movement of the sensor frame (70').

2. Transmission according to Claim 1, wherein the output shaft is embodied as a hollow shaft (20) through which the pedal crankshaft (10) extends coaxially and which is mounted rotatably with respect to the pedal crankshaft (10).

3. Transmission according to one of the preceding claims, **characterized in that** the force sensor (80'') is arranged at a distance from the rotational axis of the sensor frame (70').

4. Transmission according to one of the preceding claims, wherein the drive-side sensor transmission, the output-side sensor transmission or both sensor transmissions have transmission gears which are formed as a gearwheel with external toothing arrangements, as external toothing arrangements of the pedal crankshaft of the sensor shaft or of the output shaft or hollow shaft, as internal toothing arrangements of the pedal crankshaft of the sensor shaft or of the output shaft or hollow shaft or a combination thereof.

5. Transmission according to Claim 4, wherein the drive-side sensor transmission is formed by a pair of gearwheels which engage one in the other, with an external toothing arrangement (150, 152), and the output-side sensor transmission is formed by a pair of gearwheels (160, 162) which engage one in the other and the drive-side or the output-side sensor transmission is formed by a pair of external toothing arrangements which engage one in the other, wherein at least one of the two pairs of external toothing arrangements which engage one in the other comprises a toothing arrangement (260) which is formed directly on an outer side of the pedal crankshaft, of the sensor shaft or of the output shaft or hollow shaft and into which the toothing arrangement of a gear wheel (250) engages, or wherein the drive-side sensor transmission, the output-side sensor transmission or both sensor transmissions are respectively formed by a pair of toothing arrangements, wherein a toothing arrangement of the pair is an external toothing arrangement of a gearwheel (350), an external toothing arrangement (360) of the pedal crankshaft, of the sensor shaft or of the output shaft or hollow shaft, or an internal toothing arrangement (352, 362) of a ring gear (390), and the other toothing arrangement of the pair is an external toothing arrangement of a gearwheel (350) which is mounted on the pedal crankshaft, the sensor shaft or the output shaft or hollow shaft, or is an external toothing arrangement (360) of the pedal crankshaft, of the sensor shaft or of the output shaft or hollow shaft itself.

6. Transmission according to Claim 4 or 5, wherein the drive-side sensor transmission is formed via a drive-side crank drive gearwheel (350) which is mounted on the pedal crankshaft (10) and a first internal toothing arrangement (352) of a ring gear (390) which, as a piece of hollow shaft, forms the sensor shaft, and the output-side sensor transmission is formed by an output-side hollow shaft gear (360) which is arranged on the hollow shaft which operates as an output shaft, and a further internal toothing arrangement (362) of the ring gear, which toothing arrangement is offset axially with respect to the first internal toothing arrangement (352), wherein the internal toothing arrangements are connected to one another via the ring gear (390), and the internal toothing arrangements have different radii.

7. Transmission according to one of the preceding claims, wherein the transmission ratio of the drive-side sensor transmission corresponds to the reciprocal value of the transmission ratio of the output-side sensor transmission.

8. Method for sensing a torque of a transmission according to one of the preceding claims, which transmission is acted on by a pedal crankshaft (10), comprising the steps: transmitting the torque from the pedal crankshaft (10) to a sensor shaft (40) which is offset parallel to the pedal crankshaft (10), via a drive-side sensor transmission (50, 52), transmitting a corresponding torque from the sensor shaft (40) to an output shaft or hollow shaft (20) which is connected to an output and which has the same rotational axis as the pedal crankshaft (10), via an output-side sensor transmission (60, 62), wherein the transmission is provided, via the drive-side sensor transmission, with a transmission ratio which differs from the transmission ratio of the output-side sensor transmission, wherein the method also provides sensing a force acting on the sensor shaft (40), by means of the force sensor (70, 72, 80', 80") which is connected in a force-transmitting fashion to the sensor shaft (40), wherein the absolute value of the sensed force represents the magnitude of the torque, wherein the sensor shaft (40) is rotatably mounted in a sensor frame (70'), and the force is sensed by the force sensor supporting the sensor frame (70'), in order to sense the force which acts on the sensor frame (70') through the sensor shaft (40).

9. Method according to Claim 8, wherein the torque is transmitted via the sensor transmissions, through external toothing arrangements, engaging one in the other, of gearwheels (50-62) or of gearwheels and external toothing arrangements (260; 360) of one of the shafts, wherein the toothing arrangements and/or gearwheels form the sensor transmission, through an external toothing arrangement of a gearwheel (50-62) or of an external toothing arrangement of one of the shafts into an internal toothing arrangement (352, 362) of a ring gear which the sensor shaft provides, or a combination thereof.

## Revendications

1. Changement de vitesse pour bicyclettes électriques, permettant de détecter un couple auquel est soumis un axe de pédalier, le changement de vitesse présentant : l'axe de pédalier sur lequel agit le couple, un arbre de sortie (20) aménagé pour être relié à une sortie, un arbre de capteur (40) décalé en parallèle à l'axe de pédalier (10), et un capteur de force (80, 82, 80', 80") relié à l'arbre de capteur (40) et qui détecte une force exercée par l'arbre de capteur (40) qui correspond au couple à détecter, le changement de vitesse comprenant en outre un engrenage de capteur côté entraînement (50, 52) et un engrenage de capteur côté sortie (60, 62), l'engrenage de capteur côté entraînement (50, 52) reliant l'axe de pédalier (10) à l'arbre de capteur (40), et l'engrenage de capteur côté sortie (60, 62) reliant l'arbre de capteur (40) à l'arbre de sortie (20), l'arbre de sortie (20) étant aménagé pour être relié à une sortie, et l'engrenage de capteur côté entraînement (50, 52) présentant un rapport de transmission qui est différent du rapport de transmission de l'engrenage de capteur côté sortie (60, 62),
et
l'engrenage de capteur côté entraînement présentant une roue d'axe de pédalier côté entraînement (50) qui est disposée sur l'axe de pédalier (10) et est reliée solidement à celui-ci, et présentant une roue d'arbre de capteur côté entraînement (52) qui est disposée sur l'arbre de capteur (40) et est reliée solidement à celui-ci, dans lequel la roue d'arbre de capteur côté entraînement (52) et la roue d'axe de pédalier (50) s'engrènent, et l'engrenage de capteur côté sortie comprend une roue d'arbre creux côté sortie (60) qui est disposée sur l'arbre de sortie/l'arbre creux (20) et est reliée solidement à celui-ci, ainsi qu'une roue d'arbre de capteur côté sortie (62) qui est disposée sur l'arbre de capteur (40) et est reliée solidement à celui-ci, la roue d'arbre de capteur côté sortie (62) et la roue d'arbre creux (60) s'engrenant, **caractérisé en ce que**
le changement de vitesse comprend un cadre de capteur (70') qui est monté à l'aide d'une disposition de paliers (74, 74') dans le carter (90) du changement de vitesse, et l'arbre de capteur (40) étant monté pivotant dans le cadre de capteur (70'), le capteur de force (80") étant disposé entre le cadre de capteur (70') et le carter (90) du changement de vitesse de telle sorte qu'il détecte la force tangentielle qui agit sur le cadre de capteur (70') et empêche un mouvement de rotation du cadre de capteur (70').

2. Changement de vitesse selon la revendication 1, dans lequel l'arbre de sortie est réalisé sous la forme d'un arbre creux (20) à travers lequel l'axe de pédalier (10) s'étend coaxialement, et qui est monté rotatif par rapport à l'axe de pédalier (10).

3. Changement de vitesse selon l'une quelconque des revendications précédentes, **caractérisé en ce que** le capteur de force (80") est disposé à distance de l'axe de rotation du cadre de capteur (70').

4. Changement de vitesse selon l'une quelconque des revendications précédentes, dans lequel l'engrenage de capteur côté entraînement, l'engrenage de capteur côté sortie ou les deux engrenages de capteur présentent des roues d'engrenage qui sont réalisées sous la forme de roues dentées à dentures extérieures, de dentures extérieures de l'axe de pédalier, de l'arbre de capteur ou de l'arbre de sortie ou de l'arbre creux, sous la forme de dentures intérieures de l'axe de pédalier, de l'arbre de capteur ou de l'arbre de sortie ou de l'arbre creux ou d'une combinaison de ceux-ci.

5. Changement de vitesse selon la revendication 4, dans lequel l'engrenage de capteur côté entraînement est réalisé par une paire de roues dentées qui s'engrènent (150, 152), dotées d'une denture extérieure, et l'engrenage de capteur côté sortie est réalisé par une paire de roues dentées qui s'engrènent (160, 162), l'engrenage de capteur côté entraînement ou côté sortie étant réalisé par une paire de dentures extérieures qui s'engrènent, dans lequel au moins l'une des deux paires de dentures extérieures qui s'engrènent comprend une denture (260) qui est réalisée directement sur un côté extérieur de l'axe de pédalier, de l'arbre de capteur ou de l'arbre de sortie ou de l'arbre creux, et avec laquelle s'engrène la denture d'une roue dentée (250), ou dans lequel l'engrenage de capteur côté entraînement, l'engrenage de capteur côté sortie ou les deux engrenages de capteur sont formés respectivement par une paire de dentures, une denture de la paire étant une denture extérieure d'une roue dentée (350), une denture extérieure (360) de l'axe de pédalier, de l'arbre de capteur ou de l'arbre de sortie ou de l'arbre creux, ou une denture intérieure (352, 362) d'une couronne (390), et l'autre denture de la paire étant une denture extérieure d'une roue dentée (350) qui est montée sur l'axe de pédalier, l'arbre de capteur ou l'arbre de sortie/l'arbre creux, ou étant une denture extérieure (360) même de l'axe de pédalier, de l'arbre de capteur ou de l'arbre de sortie/l'arbre creux.

6. Changement de vitesse selon la revendication 4 ou 5, dans lequel l'engrenage de capteur côté entraînement est formé par une roue d'arbre d'entraînement de manivelle côté entraînement (350) qui est montée sur l'axe de pédalier (10), et par une première denture intérieure (352) d'une couronne (390) qui constitue l'arbre de capteur sous forme de pièce d'arbre creux, et l'engrenage de capteur côté sortie est formé par une roue d'arbre creux côté sortie (360) qui est disposée sur l'arbre creux servant d'arbre de sortie, et par une autre denture intérieure (362) de la couronne qui est décalée axialement par rapport à la première denture intérieure (352), les dentures intérieures étant reliées l'une à l'autre par l'intermédiaire de la couronne (390) et les dentures intérieures présentant des rayons différents.

7. Changement de vitesse selon l'une quelconque des revendications précédentes, dans lequel le rapport de transmission de l'engrenage de capteur côté entraînement correspond à la valeur réciproque du rapport de transmission de l'engrenage de capteur côté sortie.

8. Procédé permettant de détecter un couple d'un changement de vitesse selon l'une quelconque des revendications précédentes auquel est soumis un axe de pédalier (10), comprenant les étapes consistant à : transmettre le couple de l'axe de pédalier (10) à un arbre de capteur (40) qui est décalé en parallèle à l'axe de pédalier (10) par l'intermédiaire d'un engrenage de capteur côté entraînement (50, 52), transmettre un couple correspondant de l'arbre de capteur (40) à un arbre de sortie ou arbre creux (20) relié à une sortie et qui présente le même axe de rotation que l'axe de pédalier (10) par l'intermédiaire d'un engrenage de capteur côté sortie (60, 62), la transmission étant prévue par l'intermédiaire de l'engrenage de capteur côté entraînement avec un développement qui est différent du développement de l'engrenage de capteur côté sortie, le procédé prévoyant en outre de détecter une force qui agit sur l'arbre de capteur (40), au moyen d'un capteur de force (70, 72, 80', 80") qui est relié en transmission de force à l'arbre de capteur (40), la grandeur de la force détectée représentant la puissance du couple, l'arbre de capteur (40) étant monté pivotant dans un cadre de capteur (70'), et la force étant détectée en ce que le capteur de force soutient le cadre de capteur (70') pour détecter la force qui agit sur le cadre de capteur (70') à travers l'arbre de capteur (40).

9. Procédé selon la revendication 8, dans lequel le couple est transmis par les engrenages de capteur grâce à des dentures extérieures qui s'engrènent de roues dentées (50 à 62) ou à des roues dentées et des dentures extérieures (260 ; 360) d'un des arbres, les dentures ou les roues dentées formant l'engrenage de capteur, grâce à une denture extérieure d'une roue dentée (50 à 62) ou à une denture extérieure d'un des arbres dans une denture intérieure (352, 362) d'une couronne que prévoit l'arbre de capteur, ou grâce à une combinaison de celles-ci.
